# FASCICULE DE BREVET EUROPEEN

(11) **EP 1 757 796 B1**
(45) Date de publication et mention de la délivrance du brevet: **03.10.2018**
(21) Numéro de dépôt: 06119166.4
(22) Date de dépôt: 18.08.2006
(51) Int. Cl.: F02K 3/06, F01D 5/22

(54) **Compresseur comportant une pluralité de caissons reconstituant un volume annulaire de séparation de flux dans une turbomachine**
Verdichter mit einer Mehrzahl von Segmenten, welche ein ringformiges Volumen bilden, und die Strömung in einem Triebwerk trennen.
Compressor having a plurality of segments reconstructing an annular volume and thus separating the flow in a turbomachine

(30) Priorité: 22.08.2005 FR 0508656
(43) Date de publication de la demande: 28.02.2007
(73) Titulaire: Safran Aircraft Engines, 75015 Paris (FR)
(72) Inventeur: Bil, Eric, 77590 Chartrettes (FR); Charier, Gilles, 77130 La Grande Paroisse (FR)
(74) Mandataire: Delumeau, François Guy

(56) Documents cités:
- EP-A1- 0 643 199
- EP-A1- 1 367 250
- GB-A- 2 396 389
- US-A- 3 112 865

## Description

### Arrière-plan de l'invention

La présente invention se rapporte au domaine général des compresseurs de turbomachines à double flux.

Elle s'applique de façon privilégiée mais non limitative aux turbomachines comportant deux soufflantes contrarotatives.

Le document EP 1 367 250 divulgue une turbomachine à double flux comportant une soufflante dont les aubes de forme principale longitudinale comportent trois nageoires transversales.

Dans cet agencement, les premières nageoires situées à proximité du pied d'aube définissent avec les deuxièmes nageoires intermédiaires une portion de la veine d'un flux primaire, et les deuxièmes nageoires intermédiaires définissent avec les troisièmes nageoires excentrées une portion du volume de séparation des deux flux. Ainsi la veine du flux secondaire est définie localement entre les troisièmes nageoires excentrées et un carter extérieur 2.

Selon cet agencement avantageux, l'aube précitée traverse à la fois le flux primaire et le flux secondaire. Plus précisément, la portion longitudinale de l'aube comprise entre la première nageoire et la deuxième nageoire intermédiaire traverse radialement le flux primaire, et la portion longitudinale de l'aube située à l'extérieur de la troisième nageoire excentrée traverse longitudinalement le flux secondaire.

L'homme du métier comprendra qu'une telle aube de profil général longitudinal avec trois nageoires transversales saillantes ne peut être réalisée en matériau composite, les parties constitutives d'un élément en matériau composite devant être orientées sensiblement toutes dans le même sens.

Le document US 3 112 865 décrit une structure annulaire et plus particulièrement des moyens pour assurer l'étanchéité entre deux lames adjacentes d'une turbine à gaz.

Le document UK 2 396 389 décrit un agencement particulier de lames dans un moteur à turbine à gaz.

Le document EP 0 643 199 décrit une pale de rotor dans un moteur hybride à turbine à gaz.

Le document EP 1 367 250 décrit un surpresseur contre-rotatif pour un moteur à turbine à gaz.

### Objet et résumé de l'invention

L'invention s'attaque donc au problème général des compresseurs de turbomachine à double flux dans laquelle les aubes d'une soufflante traversent à la fois le flux primaire et le flux secondaire et dans laquelle notamment les aubes peuvent être réalisées en matériau composite.

A cet effet, l'invention concerne un compresseur de turbomachine comportant un bec séparateur prolongé par une paroi annulaire interne et une paroi annulaire externe définissant en coopération un volume annulaire de séparation d'un flux primaire et d'un flux secondaire. Ce volume comporte une pluralité de segments annulaires en forme de caissons séparés deux à deux par des aubes d'une première soufflante, les aubes traversant à la fois le flux primaire et le flux secondaire, les caissons étant fixés à une virole annulaire amont et une virole annulaire aval entraînées en rotation par les aubes.

Conformément à l'invention, les segments du volume annulaire séparant le flux primaire et le flux secondaire sont constitués par des caissons agencés entre les aubes de la première soufflante. En conséquence, le profil des aubes traversant le flux primaire et le flux secondaire peut être de type longitudinal classique si bien que ces aubes peuvent être au besoin constituées de matériau composite.

De façon préférée, le compresseur selon l'invention comporte une deuxième soufflante avec une première série d'aubes en amont du bec séparateur, et une deuxième série d'aubes positionnées dans le flux primaire, la première et la deuxième soufflante étant contrarotatives.

L'invention vise également une turbomachine comportant un compresseur tel que mentionné ci-dessus.

Dans un mode préféré de réalisation de l'invention, le compresseur de turbomachine comprend un caisson comportant deux premières parois opposées, chacune étant de forme adaptée à définir un segment d'un volume annulaire de séparation d'un flux primaire et d'un flux secondaire dans un compresseur tel que mentionné ci-dessus et deux côtés opposés séparés d'une distance sensiblement inférieure à une distance séparant deux aubes consécutives de la première soufflante et de formes correspondantes au profil de ces aubes.

Préférentiellement, le caisson est en matériau composite.

Préférentiellement, ce caisson comporte des deuxièmes parois opposées, chacune comportant des moyens de fixation des viroles annulaires amont et aval.

Dans une première variante de réalisation, le caisson comporte au moins une entretoise dont chacune des deux extrémités comporte un pas de vis, l'entretoise étant agencée de sorte que les pas de vis sont alignés avec deux trous de passage des deuxièmes parois opposées.

Dans cette première variante, le caisson comporte préférentiellement deux entretoises.

Dans une deuxième variante, les moyens de fixation du caisson selon l'invention comportent au moins une douille insérée dans l'épaisseur de chacune des deuxièmes parois.

Préférentiellement, dans cette deuxième variante de réalisation, le caisson comporte quatre douilles, deux pour la fixation à la virole amont et deux pour la fixation à la virole aval.

Dans un autre mode préféré de réalisation de l'invention, le compresseur de turbomachine comprend une virole annulaire comportant une pluralité d'encoches, chacune étant adaptée à recevoir un bord d'une aube de la première soufflante d'un compresseur tel que mentionné ci-dessus, de sorte que la virole peut être entraînée en rotation par les aubes, et des moyens pour fixer la virole à une pluralité de caissons de ce compresseur.

Selon que les encoches sont adaptées à recevoir le bord d'attaque ou le bord de fuite des aubes de la première soufflante, on appellera une telle virole "virole amont", respectivement "virole aval".

Préférentiellement, la virole amont selon l'invention comporte une extrémité formant support pour le bec séparateur de flux primaire et de flux secondaire dans le compresseur.

De façon préférée, cette virole amont comporte une pluralité d'aubes radiales positionnées dans le flux primaire.

L'homme du métier comprendra que ces aubes radiales sont entraînées en rotation par les aubes de la première soufflante via la virole amont.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une demi-vue en coupe longitudinale d'un compresseur de turbomachine à double flux conforme à l'invention dans un mode préféré de réalisation ;
- la figure 2 représente un agrandissement de la figure 1 centré sur une zone de séparation de ces flux ;
- la figure 3 représente un caisson conforme à l'invention dans un mode préféré de réalisation ;
- les figures 4 et 5 représentent l'agencement du caisson de la figure 3 dans une turbomachine conforme à l'invention ; et
- la figure 6 représente un caisson conforme à l'invention dans un deuxième mode de réalisation.

### Description détaillée de modes de réalisation

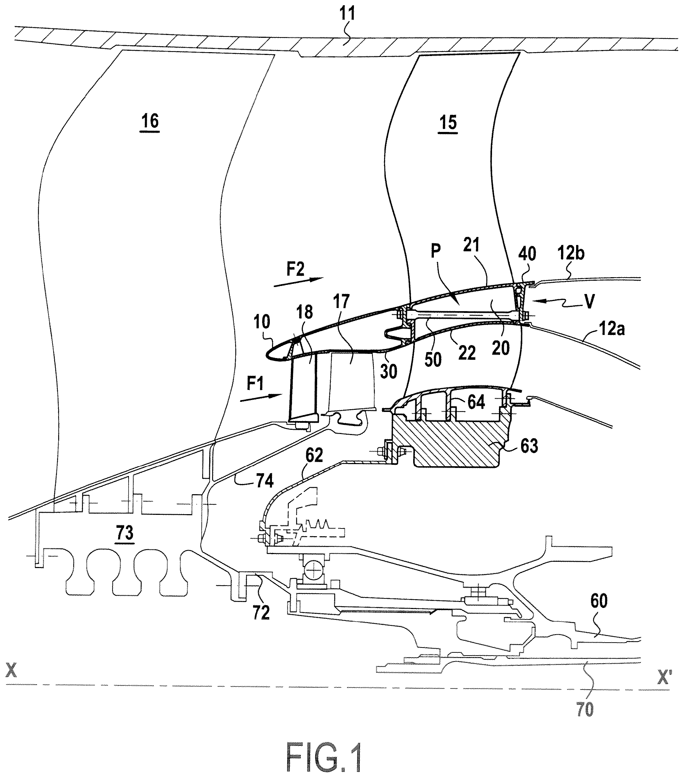

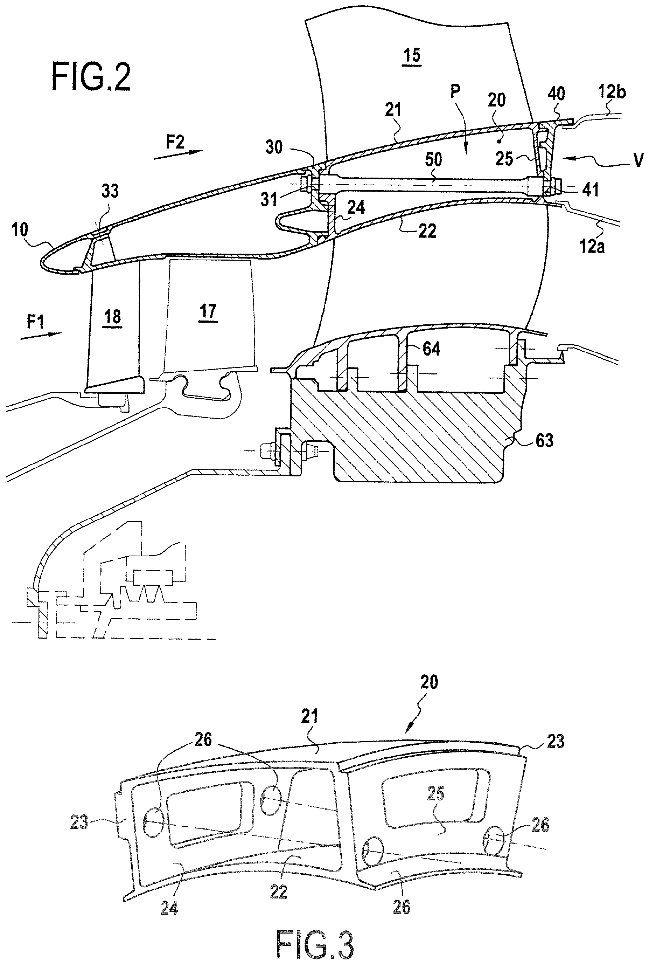

Les **figures 1** **et** **2** représentent une demi-vue en coupe longitudinale d'un compresseur à double flux conforme à l'invention dans un mode préféré de réalisation.

Ce compresseur délimité par un carter extérieur 11 comporte un axe de révolution référencé X-X' sur la figure 1.

Dans le mode de réalisation décrit ici, le compresseur selon l'invention comporte deux soufflantes contrarotatives.

Dans le mode de réalisation décrit ici, la première soufflante comporte des aubes 15 amenées en rotation par un premier axe longitudinal de transmission 60 terminé par un bras radial 62 auquel est fixé un support 63 de fixation des pieds 64 de ces aubes 15.

Dans le mode de réalisation décrit ici, la deuxième soufflante comporte une première série d'aubes 16 amenées en rotation par un deuxième axe longitudinal de transmission 70 prolongé par un bras 72 sur lequel est monté un support 73 de fixation des pieds de ces aubes 16.

Dans le mode de réalisation décrit ici, cette première série d'aubes 16 est en amont d'un bec 10 de séparation des flux primaire F1 et secondaire F2.

Dans l'exemple décrit ici, la deuxième soufflante comporte également une deuxième série d'aubes 17 entraînées en rotation par le deuxième axe longitudinal de transmission 70 par l'intermédiaire d'un bras 74, cette deuxième série d'aubes 17 étant positionnée dans le flux primaire F1.

Le flux primaire F1 et le flux secondaire F2 sont séparés par un volume annulaire référencé V, d'axe de révolution X-X'.

Ce volume annulaire V de séparation est principalement constitué d'un bec séparateur 10 prolongé par une paroi annulaire interne 12a et une paroi annulaire externe 12b.

Conformément à l'invention, les aubes 15 de la première soufflante traversent à la fois le flux primaire F1 et le flux secondaire F2. Aussi, au niveau de ces aubes 15, le volume V de séparation des flux est constitué par des segments annulaires P, chaque segment étant constitué par un caisson 20, ces caissons 20 étant séparés deux à deux par les aubes 15 de la première soufflante.

Le caisson 20 est préférentiellement constitué de matériau composite.

Conformément à l'invention, les caissons 20 comportent deux premières parois opposées, à savoir une paroi supérieure 21 et une paroi inférieure 22, ces parois étant de formes adaptées à définir un segment P du volume annulaire V de séparation des flux primaires F1 et des flux secondaires F2.

Plus précisément, la forme de la paroi inférieure 22 est adaptée à reconstituer l'enveloppe supérieure de la veine du flux primaire F1, et la paroi supérieure 21, l'enveloppe inférieure de la veine du flux secondaire F2 définie avec le carter externe 11.

Les caissons 20 sont placés entre deux aubes 15 consécutives de la première soufflante. En conséquence, ces caissons 20 ont deux côtés opposés 23 séparés d'une distance sensiblement inférieure à la distance séparant deux aubes consécutives 15. Le profil des côtés 23 du caisson 20 correspond au profil des aubes 15 de la première soufflante.

Préférentiellement, un joint d'étanchéité, non représenté ici, est positionné entre les côtés 23 du caisson 20 et les profils des aubes 15.

Conformément à l'invention, les caissons 20 sont fixés à une virole annulaire amont 30 et une virole annulaire aval 40, ces viroles étant entraînées en rotation par les aubes 15.

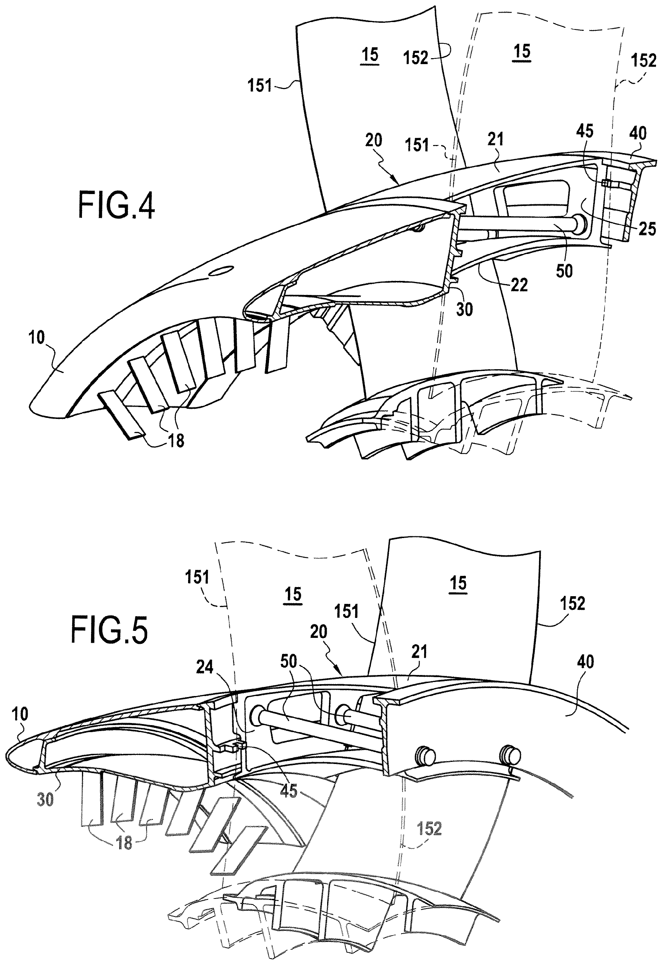

A cet effet, les viroles annulaires amont 30 et aval 40 comportent des encoches 45 adaptées à recevoir un bord d'attaque 151, respectivement de fuite 152, des aubes 15 de la première soufflante comme représenté aux **figures 4 et 5**.

Ainsi, lorsque les aubes 15 sont amenées en rotation par l'axe de transmission 60, ces aubes, prises dans les encoches 45 des viroles amont 30 et aval 40, entraînent ces viroles en rotation.

Dans le mode préféré de réalisation décrit ici, le caisson 20 conforme à l'invention comporte des deuxièmes parois opposées 24, 25, chacune de ces parois comportant des moyens de fixation aux viroles annulaires amont 30 et aval 40, de sorte que ces caissons 20 sont entraînés en rotation par l'intermédiaire des aubes 15.

La **figure 3** représente un caisson conforme à l'invention dans une première variante de réalisation.

Dans cette variante de réalisation, les moyens de fixation du caisson 20 comportent des trous de passage 26 adaptés à être alignés avec des trous de passage correspondants 41 et 31 pratiqués respectivement dans la virole aval 40 et sur la virole amont 30 (voir figure 2).

Dans cette variante préférée de réalisation, le caisson 20 comporte deux entretoises 50 dont chaque extrémité comporte un pas de vis, les entretoises 50 étant agencées de sorte que ce pas de vis est aligné avec les trous de passage 26 du caisson 20 et les trous de passage 31 et 41 de la virole amont 30 et de la virole aval 40.

Ces entretoises 50 permettent ainsi la fixation du caisson 20 aux viroles amont 30 et aval 40 par vissage.

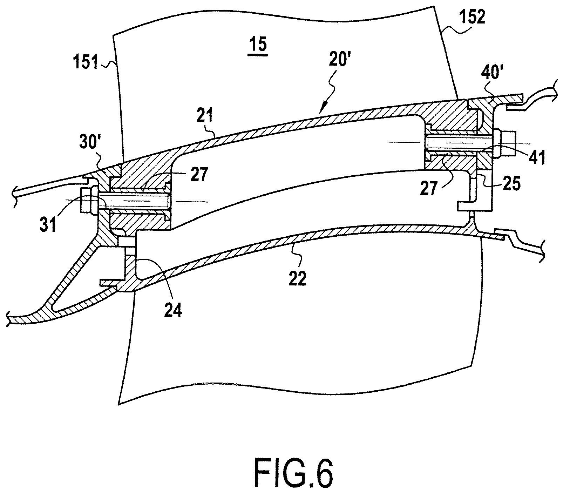

La **figure 6** représente un caisson 20' conforme à l'invention dans une deuxième variante de réalisation.

Ce caisson 20', préférentiellement en matériau composite, est adapté à être fixé par vissage à une virole annulaire amont 30' et à une virole annulaire aval 40' conformes à l'invention. Dans cette deuxième variante de réalisation, les moyens de fixation du caisson 20' comportent des douilles 27 insérées dans l'épaisseur des deuxièmes parois 24 et 25 du caisson 20'.

Ces douilles sont agencées de façon à pouvoir être positionnées en vis-à-vis d'un trou de passage 31 de la virole amont 30' et d'un trou de passage 41 de la virole aval 40'.

Dans le mode préféré de réalisation de l'invention décrit ici, la virole amont 30, 30' comporte une extrémité amont 33 formant support du bec séparateur 10. Le bec séparateur 10 est préférentiellement fixé à cette partie amont 33 de la virole amont 30 par des vis non représentées.

Dans le mode préféré de réalisation décrit ici, la virole amont 30, 30' comporte une pluralité d'aubes radiales 18 positionnées dans le flux primaire F1.

Ces aubes radiales 18 sont par exemple situées en amont de la deuxième série d'aubes 17 de la deuxième soufflante.

## Revendications

1. Compresseur de turbomachine comportant un bec séparateur (10) prolongé par une paroi annulaire interne (12a) et une paroi annulaire externe (12b) définissant en coopération un volume annulaire (V) de séparation d'un flux primaire (F1) et d'un flux secondaire (F2), **caractérisée en ce que** ledit volume comporte une pluralité de segments annulaires en forme de caissons (20, 20') séparés deux à deux par des aubes (15) d'une première soufflante, lesdites aubes (15) traversant à la fois ledit flux primaire (F1) et ledit flux secondaire (F2), lesdits caissons (20, 20') étant fixés à une virole annulaire amont (30, 30') et une virole annulaire aval (40, 40') entraînées en rotation par lesdites aubes (15).

2. Compresseur selon la revendication 1, **caractérisé en ce qu'**il comporte une deuxième soufflante avec une première série d'aubes (16) en amont dudit bec séparateur (10), et une deuxième série d'aubes (17) positionnées dans ledit flux primaire (F1), la première et la deuxième soufflantes étant contrarotatives.

3. Compresseur de turbomachine selon la revendication 1 ou 2 **caractérisé en ce que** chacun desdits segments annulaires en forme de caissons, placé entre deux dites aubes consécutives de ladite première soufflante, comporte deux premières parois opposées (21, 22), chacune desdites parois étant de forme adaptée à définir un segment (P) dudit volume annulaire (V) de séparation dudit flux primaire (F1) et dudit flux secondaire (F2) dans ledit compresseur, et deux côtés opposés (23) séparés d'une distance sensiblement inférieure à une distance séparant lesdites aubes consécutives (15) et de formes correspondantes au profil desdites aubes (15).

4. Compresseur selon la revendication 3, **caractérisé en ce que** chacun desdits segments annulaires en forme de caissons comporte des deuxièmes parois opposées (24, 25), chacune comportant des moyens de fixation (26, 27) desdites viroles annulaires amont (30, 30') et aval (40, 40').

5. Compresseur selon la revendication 4, **caractérisé en ce que** chacun desdits segments annulaires en forme de caissons comporte au moins une entretoise (50) dont chacune des deux extrémités comporte un pas de vis, ladite entretoise étant agencée de sorte que lesdits pas de vis sont alignés avec deux trous de passage (26) desdites deuxièmes parois opposées (24, 25).

6. Compresseur selon la revendication 4, **caractérisé en ce que** lesdits moyens de fixation comportent au moins une douille (27) insérée dans l'épaisseur de chacune desdites deuxièmes parois (24, 25).

7. Compresseur selon l'une quelconque des revendications 3 à 6, **caractérisé en ce que** chacun desdits segments annulaires en forme de caissons est constitué de matériau composite.

8. Compresseur de turbomachine selon l'une quelconque des revendications 1 à 7 dans lequel au moins une desdites viroles annulaires amont ou aval (30, 30', 40, 40') comporte une pluralité d'encoches (45), chacune étant adaptée à recevoir un bord (151, 152) d'une aube (15) de la première soufflante dudit compresseur, de sorte que ladite virole peut être entraînée en rotation par lesdites aubes (15), et des moyens pour fixer ladite virole (30, 30', 40, 40') auxdits segments annulaires en forme de caissons (20, 20') dudit compresseur.

9. Compresseur de turbomachine selon la revendication 8 dont lesdites encoches (45) sont adaptées à recevoir un bord d'attaque (151) d'une aube (15) de ladite première soufflante, dans lequel ladite au moins une virole comporte une extrémité amont (33) formant support dudit bec séparateur de flux primaire (F1) et de flux secondaire (F2) dans ledit compresseur.

10. Compresseur de turbomachine selon la revendication 9, dans lequel ladite au moins une virole comporte une pluralité d'aubes radiales (18) positionnées dans ledit flux primaire (F1).

11. Turbomachine comportant un compresseur selon la revendication 1 ou 2.

## Patentansprüche

1. Verdichter einer Turbomaschine, umfassend eine Trennnase (10), die durch eine ringförmige Innenwand (12a) und eine ringförmige Außenwand (12b) verlängert ist, die im Zusammenwirken ein ringförmiges Volumen (V) zum Trennen eines Primärstroms (F1) und eines Sekundärstroms (F2) definieren, **dadurch gekennzeichnet, dass** das Volumen mehrere ringförmige Segmente in Form von Kästen (20, 20') aufweist, die paarweise durch Schaufeln (15) eines ersten Gebläses getrennt sind, wobei die Schaufeln (15) gleichzeitig den Primärstrom (F1) und den Sekundärstrom (F2) durchqueren, wobei die Kästen (20, 20') an einer vorgelagerten ringförmigen Zwinge (30, 30') und einer nachgelagerten ringförmigen Zwinge (40, 40') befestigt sind, die durch die Schaufeln (15) in Drehung versetzt werden.

2. Verdichter gemäß Anspruch 1, **dadurch gekennzeichnet, dass** er ein zweites Gebläse mit einer ersten Reihe von Schaufeln (16) vorgelagert vor der Trennnase (10) und einer zweiten Reihe von Schaufeln (17) aufweist, die in dem Primärstrom (F1) angeordnet sind, wobei das erste und das zweite Gebläse gegenläufig rotierend sind.

3. Verdichter einer Turbomaschine gemäß Anspruch 1 oder 2, **dadurch gekennzeichnet, dass** jedes der ringförmigen Segmente in Form von Kästen, das zwischen zwei aufeinanderfolgenden Schaufeln des ersten Gebläses angeordnet ist, zwei erste gegenüberliegende Wände (21, 22), wobei jede der Wände von geeigneter Form ist, um ein Segment (P) des ringförmigen Volumens (V) zum Trennen des Primärstroms (F1) und des Sekundärstroms (F2) in dem Verdichter zu definieren, und zwei gegenüberliegende Seiten (23) aufweist, die durch einen Abstand getrennt sind, der im Wesentlichen geringer als ein Abstand ist, der die aufeinanderfolgenden Schaufeln (15) trennt, und von Formen, die dem Profil der Schaufeln (15) entsprechen.

4. Verdichter gemäß Anspruch 3, **dadurch gekennzeichnet, dass** jedes der ringförmigen Segmente in Form von Kästen zweite gegenüberliegende Wände (24, 25) aufweist, wobei jede Befestigungsmittel (26, 27) der vorgelagerten (30, 30') und nachgelagerten (40, 40') ringförmigen Zwinge aufweist.

5. Verdichter gemäß Anspruch 4, **dadurch gekennzeichnet, dass** jedes der ringförmigen Segmente in Form von Kästen mindestens einen Abstandhalter (50) aufweist, wovon jedes der zwei Enden einen Gewindegang aufweist, wobei der Abstandshalter derart ausgebildet ist, dass die Gewindegänge mit zwei Durchgangslöchern (26) der zweiten gegenüberliegenden Wände (24, 25) ausgerichtet sind.

6. Verdichter gemäß Anspruch 4, **dadurch gekennzeichnet, dass** die Befestigungsmittel mindestens eine Hülse (27) aufweisen, die in der Dicke von jeder der zweiten Wände (24, 25) eingefügt ist.

7. Verdichter gemäß einem der Ansprüche 3 bis 6, **dadurch gekennzeichnet, dass** jedes der ringförmigen Segmente in Form von Kästen aus Verbundmaterial gebildet ist.

8. Verdichter einer Turbomaschine gemäß einem der Ansprüche 1 bis 2, wobei mindestens eine der vorgelagerten und nachgelagerten (30, 30', 40, 40') ringförmigen Zwingen mehrere Kerben (45), wobei jede geeignet ist, eine Kante (151, 152) einer Schaufel (15) des ersten Gebläses des Verdichters derart aufzunehmen, dass die Zwinge durch die Schaufeln (15) in Drehung versetzt werden kann, und Mittel zum Befestigen der Zwinge (30, 30', 40, 40') an den ringförmigen Segmenten in Form von Kästen (20, 20') des Verdichters aufweist.

9. Verdichter einer Turbomaschine gemäß Anspruch 8, wovon die Kerben (45) geeignet sind, eine Vorderkante (151) einer Schaufel (15) des ersten Gebläses aufzunehmen, wobei die mindestens eine Zwinge ein vorgelagertes Ende (33) aufweist, das einen Träger der Trennnase des Primärstrom (F1) und des Sekundärstroms (F2) in dem Verdichter bildet.

10. Verdichter einer Turbomaschine gemäß Anspruch 9, wobei die mindestens eine Zwinge mehrere radiale Schaufeln (18) aufweist, die in dem Primärstrom (F1) angeordnet sind.

11. Turbomaschine, umfassend einen Verdichter gemäß Anspruch 1 oder 2.

## Claims

1. A turbomachine compressor including a separator lip (10) extended by an internal annular wall (12a) and an external annular wall (12b) cooperatively defining an annular volume (V) for separation of a primary flow (F1) and a secondary flow (F2), **characterized in that** said volume includes a plurality of annular segments in the form of chambers (20, 20') separated two by two by the blades (15) of a first fan, said blades (15) passing both through said primary flow (F1) and said secondary flow (F2), said chambers (20, 20') being attached to an upstream annular collar (30, 30') and a downstream annular collar (40, 40') driven in rotation by said blades (15).

2. The compressor according to claim 1, **characterized in that** it comprises a second fan with a first series of blades (16) upstream of said separator lip (10) and a second series of blades (17) positioned in said primary flow (F1), the first and the second fans being counter-rotating.

3. The turbomachine compressor according to claim 1 or 2, **characterized in that** each of said annular segments in the form of chambers, placed between said consecutive blades of said first fan, comprises two first opposite walls (21, 22), each of said walls having a shape adapted to define a segment (P) of said annular volume (V) for separation of said primary flow (F1) and said secondary flow (F2) in said compressor, and two opposite sides (23) separated by a distance substantially smaller than a distance separating said consecutive blades (15) and with shapes corresponding to the profile of said blades (15).

4. The compressor according to claim 3, **characterized in that** each of said annular segments in the form of chambers includes second opposite walls (24, 25), each including attachment means (26, 27) of said upstream (30, 30') and downstream (40, 40') annular collars.

5. The compressor according to claim 4, **characterized in that** each of said annular segments in the form of chambers comprises at least one spacer (50) each of the two ends of which has a screw thread, said spacer being arranged so that said screw threads are aligned with two passage holes (26) of said second opposite walls (24, 25).

6. The compressor according to claim 4, **characterized in that** said attachment means include at least one bushing (27) inserted into the thickness of each of said second walls (24, 25) .

7. The compressor according to any one of claims 3 to 6, **characterized in that** each of said annular segments in the form of chambers consists of composite material.

8. The turbomachine compressor according to any one of claims 1 to 7, wherein at least one of said annular collars, upstream or downstream (30, 30', 40, 40') includes a plurality of notches (45), each being adapted to receive an edge (151, 152) of a blade (15) of the first fan of said compressor, so that said collar can be driven in rotation by said blades (15), a means for attaching said collar (30, 30', 40, 40') to said annular segments in the form of chambers (20, 20') of said compressor.

9. A turbomachine compressor according to claim 8, of which said notches (45) are adapted to receive a leading edge (151) of a blade (15) of said first fan, in which said at least one collar includes an upstream end (33) forming a support of said lip for separating the primary flow (F1) and the secondary flow (F2) in said compressor.

10. The turbomachine compressor according to claim 9, wherein said at least one collar includes a plurality of radial blades (18) positioned in said primary flow (F1).

11. A turbomachine including a compressor according to claim 1 or 2.
